# EUROPEAN PATENT SPECIFICATION

(11) **EP 2 744 296 B1**
(45) Date of publication and mention of the grant of the patent: **28.03.2018**
(21) Application number: 11872275.0
(22) Date of filing: 20.10.2011
(51) Int. Cl.: G06F 21/73, H04M 1/725

(54) **METHOD AND TERMINAL FOR MANAGING RFID CARD**
VERFAHREN UND ENDGERÄT ZUR VERWALTUNG EINER RFID-KARTE
PROCÉDÉ ET TERMINAL DE GESTION DE CARTES RFID

(30) Priority: 16.09.2011 CN 201110276031
(43) Date of publication of application: 18.06.2014
(73) Proprietor: ZTE Corporation, Shenzhen, Guangdong 518057 (CN)
(72) Inventor: GUI, Zuhong, Shenzhen Guangdong 518057 (CN); LIU, Gang, Shenzhen Guangdong 518057 (CN); ZHANG, Zhenyu, Shenzhen Guangdong 518057 (CN)
(74) Representative: Lavoix
(86) International application number: PCT/CN2011/081071
(87) International publication number: WO 2013/037153

(56) References cited:
- EP-A1- 1 763 199
- WO-A1-2007/077471
- WO-A1-2010/043918
- CN-A- 101 116 322
- CN-A- 101 546 401
- CN-A- 101 843 124
- CN-A- 102 122 415
- US-A1- 2006 118 622
- US-A1- 2010 271 177

## Description

### TECHNICAL FIELD

The present disclosure relates to the field of communications, and in particular to a method and a terminal for managing a Radio Frequency Identification (RFID) card based on RFID technology and Near Field Communication (NFC) technology.

### BACKGROUND

RFID is also referred to as an electronic tag, which has following characteristics: capable of identifying a specific objective by a radio signal and reading/writing related data without establishing a mechanical or optical contact between an identification device and the specific objective. At present, various applications of RFID technology has been applied in people's daily life and work, various RFID cards closely related to people's daily life can be seen everywhere, such as a library management card, an access control card, an electronic ticket, an automatic road toll card, a bus pass, a bank card and the like.

WO 2010/043918 A1 discloses a system for imitating the functionality of a machine readable tag using a virtual tag, wherein a WCD may communicate with a machine readable tag and copy the data structure and contents of the machine readable onto the WCD, and the WCD may create a virtual tag using downloaded information and associate the virtual tag with an image corresponding to the virtual tag. US 2006/118622 A1 discloses a mobile communication device equipped with hardware and/or software components to enable the device to output a data in a form of a radio frequency signal, emulating outputting of the data by either an active or a passive RFID transponder. EP 1763199 A1 discloses a secure NFC apparatus including a plug-in socket, an NFC unit, and a protocol matching unit, wherein a security module is inserted in the plug-in socket, and the protocol matching unit determines the type of chip in the inserted security module, generates a chip identification signal according to results of the identification, and matches the protocol of the signals based on the S2C protocol with the protocol of the signals, which are input to and output from the security module, according to the chip identification signal.

NFC has following characteristics: capable of implementing bidirectional identification and connection within an operating distance of about 10 cm. With the development of NFC technology, people's habits of consumption also change a lot accordingly, such as implementing a contactless payment by using a mobile terminal based on NFC technology to have the advantages of being secure, convenient, fast and stylish.

Generally, a NFC terminal has three function modes as follows:
as an identification and read device, i.e., a reader-writer, by which a standard RFID card can be read and written;
as an device being read, i.e., a terminal card simulation mode, in which the terminal can simulate a RFID card; and
a Peer-to-Peer (P2P) mode, in which a point-to-point communications can be implemented between NFC terminals.

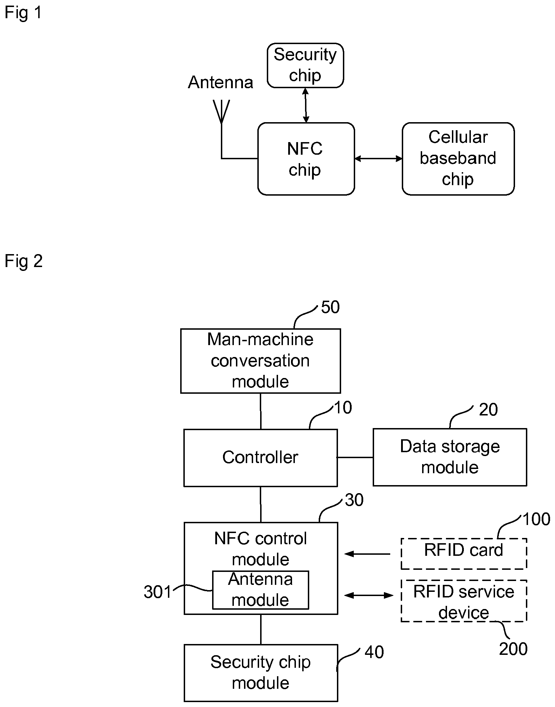

Referring to a basic schematic diagram of a NFC terminal as shown in Fig. 1, the NFC terminal includes an antenna, a NFC chip, a cellular baseband chip and a security chip. Under the control of the cellular baseband chip, the NFC chip can switch among the three function modes by the built-in antenna of the terminal. In Fig. 1, the security chip is configured to store sensitive data of a user and related NFC applications, communicate with an external read-write device via the NFC chip, and realize the secure storage and transmission of data.

With the wide application of RFID technology in daily life, a user may hold more and more RFID cards, and those RFID cards become a necessity in his/her life, for example, the RFID cards held by the user may include a bus pass, a bank card, a room key, a car key and the like. However, it may also cause inconvenience for the user to take along and manage so many RFID cards, and loss or damage of any RFID card may bring trouble to the user's life.

### SUMMARY

The present disclosure is intended to provide a method and a terminal for managing a RFID card, so as to solve the problem in the prior art that it is difficult for a user to manage or take along multiple RFID cards, thus implementing management of multiple RFID cards.

To this end, the technical solutions of the present disclosure are implemented as follows.

A method for managing a Radio Frequency Identification (RFID) card, as defined in claim 1. A terminal for managing a RFID card, as defined in claim 3. The terminal further includes a man-machine conversation module connected to the controller, and the man-machine conversation module is configured to implement man-machine interaction.

The NFC control module includes an antenna module configured to implement information interaction with the RFID card and a RFID service device.

It can be seen from above technical solutions of the present disclosure that a RFID information database is established on a terminal by using NFC technology, when the terminal is used to replace the corresponding RFID card for service, RFID information stored in the information database of the terminal will be written into a security chip module of the terminal, and a NFC control module of the terminal is enabled to be in a NFC simulation mode so as to enable the terminal to implement the corresponding functions of the RFID card. The above technical solutions can solve the problem that it is inconvenient for a user to manage multiple RFID cards he holds, and avoid loss that may be caused during use of a RFID card, thus implementing convenient and secure management of the RFID card.

### BRIEF DESCRIPTION OF THE DRAWINGS

Fig. 1 shows a basic schematic diagram of a NFC terminal;
Fig. 2 shows a structure diagram of a terminal for managing a RFID card according to an embodiment of the present disclosure;
Fig. 3 shows a schematic diagram of reading RFID information of a RFID card by a terminal according to an embodiment of the present disclosure;
Fig. 4 shows a schematic diagram of replacing a RFID card for service by a terminal according to an embodiment of the present disclosure;
Fig. 5 shows a flowchart for managing a RFID card according to an embodiment of the present disclosure;
Fig. 6 shows a flowchart for establishing a RFID information database according to embodiments of the present disclosure; and
Fig. 7 shows a flowchart for using a terminal to replace a RFID card for service according to embodiments of the present disclosure.

### DETAILED DESCRIPTION

In order to make the technical problem to be solved, technical solutions and advantages of the present disclosure clearer, the present disclosure will be further explained in detail below with reference to the drawings and embodiments. It should be appreciated that the specific embodiments are only used to explain the present disclosure instead of limiting the present disclosure.

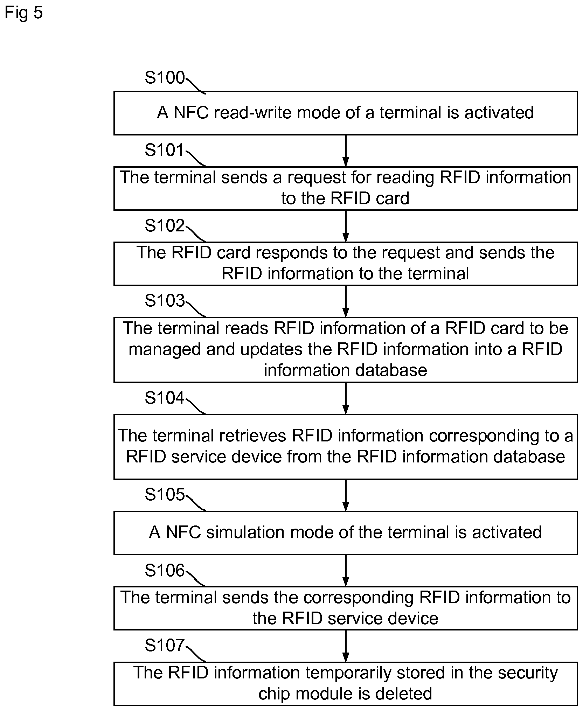

Referring to Fig. 5, it shows a flowchart for managing a RFID card according to an embodiment of the present disclosure. The flow includes the following steps:
S100: A Near Field Communication (NFC) read-write mode of a terminal is activated; and
S103: The terminal reads RFID information of a RFID card to be managed and updates the RFID information into a RFID information database.

Specifically, the terminal refers to a NFC terminal, in which the currently matured NFC technology is integrated, the terminal may be a portable terminal such as a mobile phone, a Personal Digital Assistant (PDA), a smart phone and the like.

The RFID card to be managed may be various cards, such as a bus pass, a bank card, a room key, a car key and the like, the terminal collects the RFID information of these RFID cards to eventually form a RFID information database, so as to use the terminal to replace the corresponding RFID card when required subsequently to implement the corresponding service, for example, when using the terminal to replace a bus pass for payment service, a card reader (i.e., the RFID service device described below) reads the corresponding RFID information from the terminal and implement the payment service.

When the quantity of RFID cards held by a user increases continuously, the RFID information database stored in a terminal may be updated according to the method described above, so as to enable the terminal a function for managing several kinds of RFID cards.

In a preferred embodiment, before the step S103, i.e., before the step of reading, by the terminal, RFID information of a RFID card to be managed, the flow further includes:
S101: The terminal sends a request for reading RFID information to the RFID card; and
S102: The RFID card responds to the request and sends the RFID information to the terminal.

In a preferred embodiment, after implementing all the steps, the flow further includes the following steps:
S104: The terminal retrieves RFID information corresponding to a RFID service device from the RFID information database;
S105: A NFC simulation mode of the terminal is activated; and
S106: The terminal sends the corresponding RFID information to the RFID service device.

In steps S104 to S106, a terminal pre-stored with the RFID information database is used to replace the RFID card for implementing the corresponding function. After the terminal retrieves the RFID information corresponding to the RFID service device from the RFID information database, it can store temporarily the RFID information in the security chip module. When the RFID service device (such as a card reader) requests the terminal for the RFID information, the terminal will respond to the request and send the RFID information temporarily stored in the security chip module to the RFID service device.

In a preferred embodiment, after implementing the above steps S100 to S106, the flow further includes:
S107: The RFID information temporarily stored in the security chip module is deleted.

The flow for establishing a RFID information database and the flow for replacing a RFID card by a terminal for service will be described respectively below.

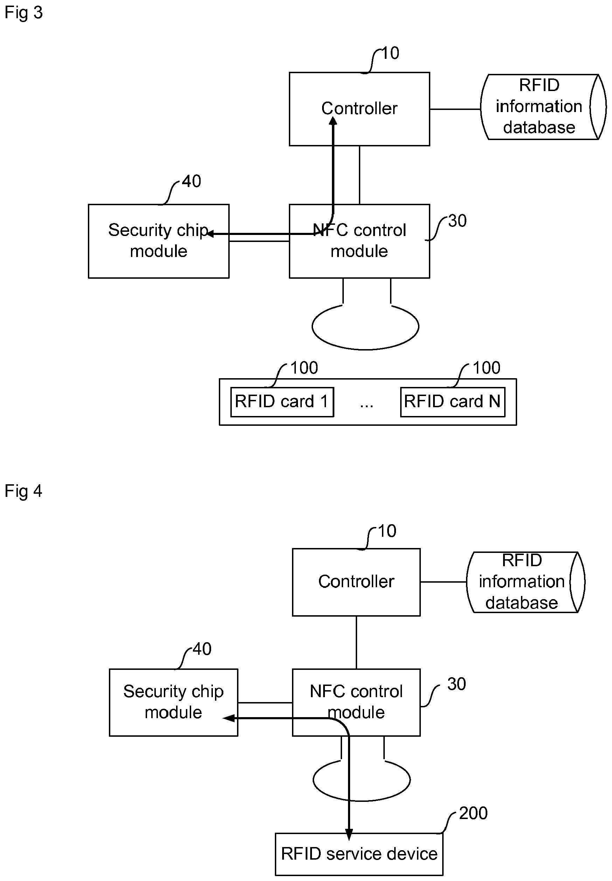

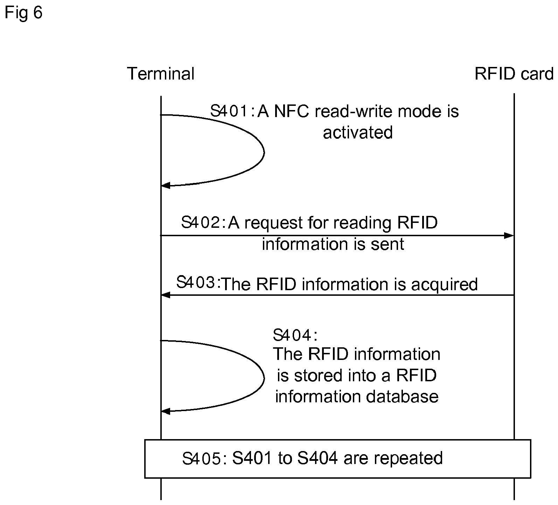

Referring to Fig. 6, it shows a flowchart for establishing a RFID information database according to an embodiment of the present disclosure. In conjunction with Fig. 3, the flow shown in Fig. 6 includes the following steps:
S401: A NFC read-write mode of a terminal is activated;
S402: The terminal sends a request for reading RFID information to a RFID card;
S403: The RFID card responds to the request, and the terminal acquires the RFID information stored in the RFID card;
S404: The terminal stores the acquired RFID information of the RFID card in a local RFID information database; and
S405: For the other RFID cards, S401 to S404 may be implemented repeatedly to implement the RFID information acquisition of multiple RFID cards, so as to establish RFID information databases of a user's RFID cards.

It should be noted that in Fig. 3, a controller 10 configures the terminal to be in the NFC read-write mode by a NFC control module 30. The terminal reads the information in various RFID cards and establishes the RFID information database by using the acquired information.

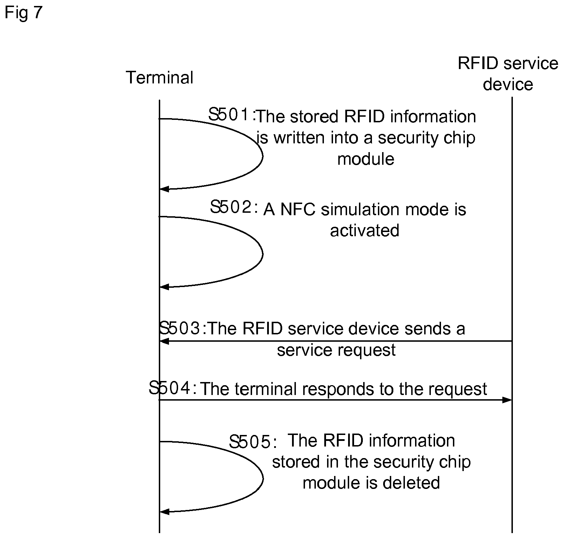

Referring to Fig. 7, it shows a flowchart for using a terminal to replace a RFID card for service according to embodiments of the present disclosure, in conjunction with Fig. 4, the flow shown in Fig. 7 includes the following steps:
S501: A RFID service device establishes a connection with the terminal according to the present disclosure (for example, by approaching the terminal to the RFID service device, based on the NFC technology held by the terminal itself, the terminal establishes a connection with the RFID service device). After the connection relation is established, the terminal searches the RFID information corresponding to the RFID service device from the RFID information database in itself, and writes the RFID information into the security chip module by the NFC control module;
S502: A NFC simulation mode of the terminal is activated;
S503: The RFID service device sends a service request to the terminal;
S504: The terminal responds to the service request of the RFID service device, acquires the corresponding RFID information from a security chip module, and sends the RFID information to the RFID service device;
S505: After the terminal transmits the RFID information to the RFID service device, the current RFID information in the security chip module is deleted.

It should be noted that in Fig. 4, when a user needs to use a RFID card service, the card information in the RFID information database may be stored into a security chip module 40 by a controller 10. At this point, the terminal is configured to be in a card simulation mode, and a RFID service device 200 can acquire all the required information from the security chip module 40. The other card service are processed in the similar way, in this way, the objective of replacing multiple cards with the terminal is achieved.

Referring to Fig. 2, it shows a structure diagram of a terminal for managing a RFID card according to embodiments of the present disclosure. A controller 10, a NFC control module 30 and a data storage module 20 are included in Fig. 2, wherein
the controller 10, connected to the data storage module 20 and the NFC control module 30 respectively, is configured to activate the NFC module 30 to be in a NFC read-write mode or a NFC simulation mode; and further configured to send RFID information of a RFID card to be managed read by the NFC control module 30 to the data storage module 20;
for example, when the terminal is a mobile phone, the controller 10 may be a cellular baseband chip, which is configured to control and activate a NFC control module 30 in the mobile phone to be in the NFC read-write mode, thus the cellular baseband chip reads the RFID information from the RFID card by the NFC control module 30, or writes the corresponding RFID information acquired from a RFID information database of the data storage module 20 into a security chip module; in addition, the controller 10 is further configured to control and activate the NFC control module 30 in the mobile phone to be in the NFC simulation mode, when an external RFID service device establishes a connection with the mobile phone, the controller 10 retrieves the RFID information corresponding to the RFID service device from the data storage module 20 and sends the RFID information to the security chip module by the NFC control module 30, so that the NFC control module 30 acquires the corresponding RFID information from the security chip module to implement information interaction with the RFID service device, thus implementing the corresponding service of the RFID service device.
the NFC control module 30 is configured to read the RFID information of the RFID card to be managed and to send the RFID information to the controller 10; and
the data storage module 20 is configured to store the RFID information of the RFID card to be managed to form the RFID information database.

In a preferred embodiment, the terminal for managing a RFID card further includes a security chip module 40 connected to the NFC control module 30, and the security chip module 40 is configured to temporarily store RFID information corresponding to a RFID service device retrieved from the data storage module 20 by the controller 10. When the controller 10 of the terminal controls and activates the NFC control module 30 in the mobile phone to be in the NFC simulation mode, when an external RFID service device establishes a connection with the mobile phone, the controller 10 retrieves the RFID information corresponding to the RFID service device from the data storage module 20 and sends the RFID information to the security chip module 40 by the NFC control module 30, so that the NFC control module 30 acquires the corresponding RFID information from the security chip module 40 to implement information interaction with the RFID service device, thus implementing the corresponding service of the RFID service device. When the information interaction between the NFC control module 30 and the RFID service device completes, the controller 10 controls the NFC control module 30 to delete the RFID information stored in the security chip module 40.

In a preferred embodiment, the NFC control module 30 includes an antenna module 301 configured to implement information interaction with the RFID card and a RFID service device.

In a more preferred embodiment, the terminal for managing a RFID card further includes a man-machine conversation module 50 connected to the controller 10, and the man-machine conversation module 50 is configured to implement man-machine interaction,. For example, the man-machine conversation module may prompt a user which operation mode the NFC control module 30 is in under the control of the terminal.

It can be seen from above technical solutions of the present disclosure that a RFID information database is established on a terminal by using NFC technology, when the terminal is used to replace the corresponding RFID card for service, RFID information stored in the information database of the terminal will be written into a security chip module 40 of the terminal, and a NFC control module 30 of the terminal is enabled to be in a NFC simulation mode so as to enable the terminal to implement the corresponding functions of the RFID card. The above technical solutions can solve the problem that it is inconvenient for a user to manage multiple RFID cards he holds, and avoid loss that may be caused during use of a RFID card, thus implementing convenient and secure management of the RFID card.

The above are merely the preferred embodiments of the present disclosure, and are not intended to limit the scope of protection of the claims of the present disclosure.

## Claims

1. A method for managing a Radio Frequency Identification RFID card, comprising:
activating (100) a Near Field Communication NFC read-write mode of a terminal; and
reading (103), by the terminal, RFID information of a RFID card to be managed and updating the RFID information into a RFID information database;
repeatedly implement, by the terminal, the reading operation to implement RFID information acquisition of multiple RFID cards;
establishing, by the terminal, a connection with a RFID service device;
retrieving (104), by the terminal, RFID information corresponding to the RFID service device from the RFID information database;
temporarily storing the RFID information into a security chip module (40);
activating (105) a NFC simulation mode of the terminal, wherein the terminal under the NFC simulation mode is used to replace the RFID card for implementing a function of the RFID card; and
responding to, by the terminal, a service request from the RFID service device, acquiring the corresponding RFID information from the security chip module (40), and sending (106) the corresponding RFID information to the RFID service device; and
deleting (107) the RFID information temporarily stored in the security chip module (40).

2. The method according to claim 1, wherein before the step of reading (103), by the terminal, RFID information of a RFID card to be managed, the method further comprises:
sending (101), by the terminal, a request for reading RFID information to the RFID card; and
responding (102), by the RFID card, to the request and sending the RFID information to the terminal.

3. A terminal for managing a RFID card, comprising a controller (10), a NFC control module (30), a data storage module (20), and a security chip module (40), wherein
the controller (10), connected to the data storage module (20) and the NFC control module (30) respectively, is configured to:
activate the NFC module (30) to be in a NFC read-write mode or a NFC simulation mode, wherein the terminal under the NFC simulation mode is used to replace the RFID card for implementing a function of the RFID card;
send RFID information of a RFID card to be managed read by the NFC control module (30) to the data storage module (20) and repeatedly implement reading operation to implement RFID information acquisition of multiple RFID cards;
retrieve RFID information corresponding to the RFID service device from the data storage module (20) and send the RFID information corresponding to the RFID service device to the security chip module (40) by the NFC control module (30) when the NFC control module (30) establishes a connection with a RFID service device; and
control the NFC control module (30) to delete the RFID information temporarily stored in the security chip module (40) when information interaction between the NFC control module (30) and the RFID service device completes;
the NFC control module (30) is configured to read the RFID information of the RFID card to be managed and to send the RFID information to the controller (10); and
the data storage module (20) is configured to store the RFID information of the RFID card to be managed to form a RFID information database;
the security chip module (40), connected to the NFC control module (30), is configured to temporarily store RFID information corresponding to a RFID service device retrieved from the data storage module (20) by the controller (10).

4. The terminal according to claim 3, wherein the terminal further comprises a man-machine conversation module (50) connected to the controller (10), and the man-machine conversation module (50) is configured to implement man-machine interaction.

5. The terminal according to claim 3, wherein the NFC control module (30) comprises an antenna module (301) configured to implement information interaction with the RFID card and a RFID service device.

## Patentansprüche

1. Verfahren zur Verwaltung einer Radiofrequenz-Identifikations, RFID-Karte, umfassend:
Aktivieren (100) eines Nahfeldkommunikations, NFC,-Lese-/Schreibmodus eines Endgeräts; und
Auslesen (103) von RFID-Informationen einer zu verwaltenden RFID-Karte durch das Endgerät und Aktualisieren der RFID-Informationen in einer RFID-Informationsdatenbank;
wiederholtes Implementieren des Lesevorgangs durch das Endgerät, um RFID-Informationsabruf von mehreren RFID-Karten zu implementieren;
Herstellen einer Verbindung mit einer RFID-Dienstvorrichtung durch das Endgerät;
Abrufen (104) von RFID-Informationen, die der RFID-Dienstvorrichtung entsprechen, durch das Endgerät aus der RFID-Informationsdatenbank;
temporäres Speichern der RFID-Informationen in einem Sicherheitschipmodul (40);
Aktivieren (105) eines NFC-Simulationsmodus des Endgeräts, wobei das Endgerät gemäß dem NFC-Simulationsmodus zum Ersetzen der RFID-Karte zum Implementieren einer Funktion der RFID-Karte verwendet wird; und
Antworten durch das Endgerät auf eine Dienstanforderung von der RFID-Dienstvorrichtung durch Abrufen der entsprechenden RFID-Informationen aus dem Sicherheitschipmodul (40) und Senden (106) der entsprechenden RFID-Informationen an die RFID-Dienstvorrichtung; und
Löschen (107) der im Sicherheitschipmodul (40) temporär gespeicherten RFID-Informationen.

2. Verfahren nach Anspruch 1, wobei das Verfahren vor dem Schritt des Auslesens (103) von RFID-Informationen einer zu verwaltenden RFID-Karte durch das Endgerät ferner umfasst:
Senden (101) durch das Endgerät einer Anforderung zum Auslesen von RFID-Informationen an die RFID-Karte; und
Antworten (102) durch die RFID-Karte auf die Anforderung und Senden der RFID-Informationen an das Endgerät.

3. Endgerät zum Verwalten einer RFID-Karte, umfassend eine Steuerung (10), ein NFC-Steuermodul (30), ein Datenspeichermodul (20) und ein Sicherheitschipmodul (40), wobei die Steuerung (10), die mit dem Datenspeichermodul (20) bzw. dem NFC-Steuermodul (30) verbunden ist, konfiguriert ist zum:
Aktivieren des NFC-Moduls (30), um in einem NFC-Lese-/Schreibmodus oder einem NFC-Simulationsmodus zu sein, wobei das Endgerät gemäß dem NFC-Simulationsmodus zum Ersetzen der RFID-Karte zum Implementieren einer Funktion der RFID-Karte verwendet wird;
Senden von RFID-Informationen einer zu verwaltenden RFID-Karte, die durch das NFC-Steuermodul (30) ausgelesen wird, an das Datenspeichermodul (20) und wiederholten Implementieren des Auslesevorgangs, um RFID-Informationsabruf von mehreren RFID-Karten zu implementieren;
Abrufen von RFID-Informationen, die der RFID-Dienstvorrichtung entsprechen, aus dem Datenspeichermodul (20) und Senden der RFID-Informationen, die der RFID-Dienstvorrichtung entsprechen, durch das NFC-Steuermodul (30) an das Sicherheitschipmodul (40), wenn das NFC-Steuermodul (30) eine Verbindung mit einer RFID-Dienstvorrichtung herstellt; und
Steuern des NFC-Steuermoduls (30) zum Löschen der im Sicherheitschipmodul (40) temporär gespeicherten RFID-Informationen, wenn Informationsinteraktion zwischen dem NFC-Steuermodul (30) und der RFID-Dienstvorrichtung endet;
wobei das NFC-Steuermodul (30) so konfiguriert ist, dass es die RFID-Informationen der zu verwaltenden RFID-Karte ausliest und die RFID-Informationen an die Steuerung (10) sendet; und
das Datenspeichermodul (20) so konfiguriert ist, dass es die RFID-Informationen der zu verwaltenden RFID-Karte speichert, um eine RFID-Informationsdatenbank zu bilden;
das Sicherheitschipmodul (40), das mit dem NFC-Steuermodul (30) verbunden ist, so konfiguriert ist, dass es die RFID-Informationen, die einer RFID-Dienstvorrichtung entsprechen und von der Steuerung (10) aus dem Datenspeichermodul (20) abgerufen werden, temporär speichert.

4. Endgerät nach Anspruch 3, wobei das Endgerät ferner ein Mensch-Maschine-Konversationsmodul (50) umfasst, das mit der Steuerung (10) verbunden ist, und das Mensch-Maschine-Konversationsmodul (50) zum Implementieren von Mensch-Maschine-Interaktion konfiguriert ist.

5. Endgerät nach Anspruch 3, wobei das NFC-Steuermodul (30) ein Antennenmodul (301) umfasst, das zum Implementieren von Informationsinteraktion mit der RFID-Karte und einer RFID-Dienstvorrichtung konfiguriert ist.

## Revendications

1. Procédé pour gérer une carte d'identification radiofréquence, RFID, comprenant
l'activation (100) d'un mode de lecture-écriture de communication en champ proche, NFC, d'un terminal ; et
la lecture (103), par le terminal, des informations RFID d'une carte RFID à gérer et la mise à jour des informations RFID dans une base de données d'informations RFID ;
l'exécution de manière répétée, par le terminal, de l'opération de lecture pour effectuer l'acquisition des informations RFID de multiples cartes RFID ;
l'établissement, par le terminal, d'une connexion avec un dispositif de service RFID
la récupération (104), par le terminal, d'informations RFID correspondant au dispositif de service RFID dans la base de données d'informations RFID ;
la mémorisation temporairement des informations RFID dans un module de puce de sécurité (40) ;
l'activation (105) d'un mode de simulation de NFC du terminal, dans lequel le terminal, dans le mode de simulation de NFC, est utilisé pour remplacer la carte RFID pour mettre en oeuvre une fonction de la carte RFID ; et
en réponse, par le terminal, à une demande de service provenant du dispositif de service RFID, l'acquisition des informations RFID correspondantes à partir du module de puce de sécurité (40), et l'envoi (106) des informations RFID correspondantes au dispositif de service RFID ; et
l'effacement (107) des informations RFID mémorisées temporairement dans le module de puce de sécurité (40).

2. Procédé selon la revendication 1, dans lequel, avant l'étape de lecture (103), par le terminal, des informations RFID d'une carte RFID à gérer, le procédé comprend en outre :
l'envoi (101), par le terminal, d'une demande pour lire les informations RFID sur la carte RFID ; et
la réponse (102), par la carte RFID, à la demande et l'envoi des informations RFID au terminal.

3. Terminal pour gérer une carte RFID, comprenant un contrôleur (10), un module de commande de NFC (30), un module de mémorisation de données (20), et un module de puce de sécurité (40), dans lequel
le contrôleur (10), connecté au module de mémorisation de données (20) et au module de commande de NFC (30) respectivement, est configuré pour :
activer le module de NFC (30) pour qu'il soit dans un mode de lecture-écriture de NFC ou un mode de simulation de NFC, dans lequel le terminal, dans le mode de simulation de NFC, est utilisé pour remplacer la carte RFID pour mettre en oeuvre une fonction de la carte RFID ;
envoyer les informations RFID d'une carte RFID à gérer lues par le module de commande de NFC (30) au module de mémorisation de données (20) et effectuer de manière répétée l'opération de lecture pour effectuer l'acquisition des informations RFID de multiples cartes RFID ;
récupérer les informations RFID correspondant au dispositif de service RFID à partir du module de mémorisation de données (20) et envoyer les informations RFID correspondant au dispositif de service RFID au module de puce de sécurité (40) par le module de commande de NFC (30) lorsque le module de commande de NFC (30) établit une connexion avec un dispositif de service RFID ; et
commander le module de commande de NFC (30) pour effacer les informations RFID mémorisées temporairement dans le module de puce de sécurité (40) lorsqu'une interaction d'informations entre le module de commande de NFC (30) et le dispositif de service RFID s'achève ;
le module de commande de NFC (30) est configuré pour lire les informations RFID de la carte RFID à gérer et pour envoyer les informations RFID au contrôleur (10) ; et
le module de mémorisation de données (20) est configuré pour mémoriser les informations RFID de la carte RFID à gérer pour former une base de données d'informations RFID ;
le module de puce de sécurité (40), connecté au module de commande de NFC (30), est configuré pour mémoriser temporairement les informations RFID correspondant à un dispositif de service RFID récupérées à partir du module de mémorisation de données (20) par le contrôleur (10).

4. Terminal selon la revendication 3, dans lequel le terminal comprend en outre un module de conversation homme-machine (50) connecté au contrôleur (10), et le module de conversation homme-machine (50) est configuré pour effectuer une interaction homme-machine.

5. Terminal selon la revendication 3, dans lequel le module de commande de NFC (30) comprend un module d'antenne (301) configuré pour effectuer une interaction d'informations avec la carte RFID et un dispositif de service RFID.
